# EUROPEAN PATENT SPECIFICATION

(11) **EP 4 364 976 B1**
(45) Date of publication and mention of the grant of the patent: **31.12.2025**
(21) Application number: 21948486.2
(22) Date of filing: 17.11.2021
(51) Int. Cl.: B60C 13/02, B60C 19/00, B60C 15/06

(54) **TIRE**
REIFEN
PNEU

(30) Priority: 30.06.2021 JP 2021109736
(43) Date of publication of application: 08.05.2024
(73) Proprietor: BRIDGESTONE CORPORATION, Chuo-ku Tokyo 104-8340 (JP)
(72) Inventor: KUWAYAMA, Isao, Tokyo 104-8340 (JP)
(74) Representative: Marks & Clerk LLP
(86) International application number: PCT/JP2021/042334
(87) International publication number: WO 2023/276183

(56) References cited:
- JP-A- 2002 205 516
- JP-A- 2002 205 516
- JP-A- 2006 188 143
- JP-A- 2006 188 143
- JP-A- 2007 532 378
- JP-A- 2008 164 454
- JP-A- 2008 254 661
- KR-A- 20210 034 327
- US-A1- 2020 338 933

## Description

### TECHNICAL FIELD

The present invention relates to a tire.

### BACKGROUND

A structure in which a communication device such as an RF tag is embedded in a tire is known. For example, JP 2020-179827 A (PTL 1) discloses a tire in which an RF tag is provided between the rim strip rubber and sidewall rubber of the tire.

JP 2006 188143 A relates to a pneumatic tire including: a pair of bead portions including at least a bead core; a carcass layer folded back from the inside to the outside in the tread width direction around the bead core; and the electronic device capable of writing or reading information through a wireless communication. The pneumatic tire, with an electronic device housed therein, includes a protective member for protecting the electronic device against vibrations and impacts, and the protective member is embedded in the bead section outside in the tread width direction of the carcass layer.

JP 2002 205516 A relates to a pneumatic tire, the transponder coated with resin on the outside of the surface of the pneumatic tire is partially covered with side tread rubber and gripped. The transponder coated with the resin is previously engaged with a recessed part in the surface of a die, and then unvulcanized tire is inserted into the die and vulcanized.

KR 2021 0034327 A relates to a tire having a sidewall patch fastening part and a coupling part, which comprises: a structural frame part in which a patch can be coupled to an outer surface of the tire sidewall; a patch part coupled to the structural frame part of the outermost side of the tire sidewall; a fastening part formed on the structural frame part; and the coupling part formed on the patch part to engage the fastening part.

US 2020/338933 A1 relates to a tire including a bead core; a bead filler which extends to an outer side in a tire-radial direction of the bead core; a carcass ply which extends from the bead core to another bead core and is folded around the bead core; a rim strip rubber which is arranged at least at an outer side in a tire-width direction of the carcass ply which has been folded back around the bead core; and a side-wall rubber covering a part on an outer side in the tire-width direction of the rim strip rubber, in which an RFID tag serving as an electronic component is provided between the rim strip rubber and the side-wall rubber.

### CITATION LIST

### Patent Literature

PTL 1: JP 2020-179827 A

### SUMMARY

### (Technical Problem)

There is still a need for further improvement in the usefulness of a communication device provided in a tire, such as improvement in the durability or communicability of the communication device.

It could therefore be helpful to provide a tire provided with a communication device with improved usefulness.

### (Solution to Problem)

A tire according to the present invention comprises: a projecting portion that projects outward in a tire width direction on a tire outer circumferential surface of a sidewall portion, wherein the projecting portion includes at least part of a rubber chafer and at least part of a side rubber; and a communication device embedded in the projecting portion, wherein the communication device is embedded at a boundary between the at least part of the rubber chafer and the at least part of the side rubber.

### (Advantageous Effect)

It is thus possible to provide a tire provided with a communication device with improved usefulness.

### BRIEF DESCRIPTION OF THE DRAWINGS

In the accompanying drawings:
FIG. 1 is a partial cross-sectional view in the tire width direction of a tire according to Embodiment 1 the present invention;
FIG. 2 is a partial cross-sectional view in the tire width direction of a tire according to Embodiment 2, useful for understanding the present invention, but not according to the present invention; and
FIG. 3 is a partial cross-sectional view in the tire width direction of a tire according to Embodiment 3, useful for understanding the present invention, but not according to the present invention.

### DETAILED DESCRIPTION

Embodiments of a tire according to the present invention will be described below with reference to the drawings. Common members and parts in the drawings are given the same reference signs. The drawings are schematic and the ratios of dimensions and the like may differ from the actual ones. In this specification, the "tire width direction" denotes a direction parallel to the rotation axis of the tire, the "tire radial direction" denotes a direction orthogonal to the rotation axis of the tire, and the "tire circumferential direction" denotes a direction in which the tire rotates around the rotation axis of the tire.

In this specification, the "tire radial inner side" denotes the side closer to the rotation axis of the tire in the tire radial direction, and the "tire radial outer side" denotes the side farther from the rotation axis of the tire in the tire radial direction. Moreover, the "tire widthwise inner side" denotes the side closer to the tire equatorial plane CL in the tire width direction, and the "tire widthwise outer side" denotes the side farther from the tire equatorial plane CL in the tire width direction.

In this specification, the positional relationship between the elements of the tire is measured in a reference state, unless otherwise specified. The "reference state" is a state in which the tire is attached to a rim of a wheel, which is an applicable rim, filled to a prescribed internal pressure, and placed under no load. Both ends in the tire width direction of the contact patch that is in contact with the road surface in a state in which the tire is attached to a rim of a wheel, which is an applicable rim, filled to a prescribed internal pressure, and placed under a prescribed load are referred to as ground contact edges E. In the following description, it is assumed that the tire has its inner cavity filled with air and is mounted on a vehicle such as a passenger vehicle. However, the inner cavity of the tire may be filled with a fluid other than air, and the tire may be mounted on a vehicle other than a passenger vehicle.

In this specification, the "applicable rim" is an approved rim ("measuring rim" in ETRTO (European Tyre and Rim Technical Organization) Standards Manual, "design rim" in TRA (Tire and Rim Association, Inc.) Year Book) in applicable size that is described or will be described in the future in an effective industrial standard in areas where tires are produced and used, such as JATMA (Japan Automobile Tyre Manufacturers Association) Year Book in Japan, ETRTO Standards Manual in Europe, or TRA Year Book in the United States. In the case of a size not described in the industrial standard, the "applicable rim" denotes a rim whose width corresponds to the bead width of the tire. The "applicable rim" includes not only current size but also a size that may be included in the industrial standard in the future. An example of the "size that will be described in the future" is the size described as "future developments" in ETRTO Standards Manual 2013.

In this specification, the "prescribed internal pressure" denotes the air pressure (maximum air pressure) corresponding to the maximum load capability of a single wheel in applicable size and ply rating described in the industrial standard such as JATMA Year Book. In the case of a size not described in the industrial standard, the "prescribed internal pressure" denotes the air pressure (maximum air pressure) corresponding to the maximum load capability defined for each vehicle on which the tire is mounted. In this specification, the "prescribed load" denotes the load corresponding to the maximum load capability of a single wheel in applicable size and ply rating described in the industrial standard. In the case of a size not described in the industrial standard, the "prescribed load" denotes the load corresponding to the maximum load capability defined for each vehicle on which the tire is mounted.

### (Embodiment 1)

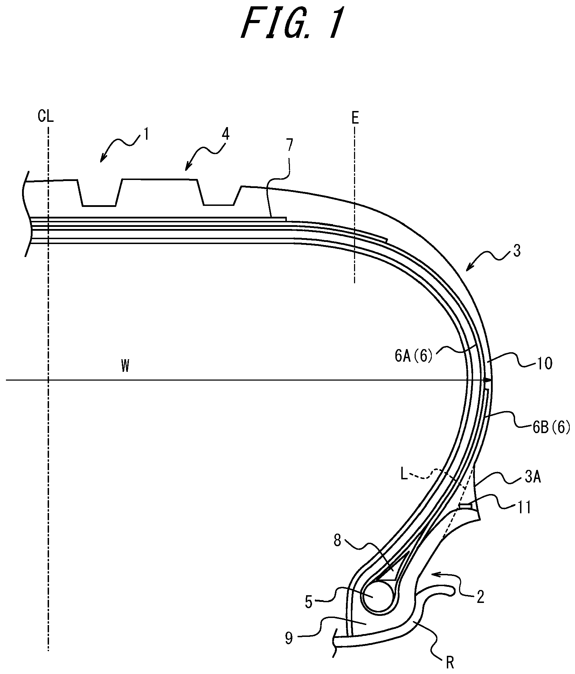

A tire 1 according to Embodiment 1 of the present invention will be described below with reference to FIG. 1.

FIG. 1 is a partial cross-sectional view of the tire 1 according to Embodiment 1 of the present invention, taken along the tire width direction. FIG. 1 illustrates the tire 1 in the reference state in which the tire 1 is attached to a rim R of a wheel, which is the applicable rim, filled to the prescribed internal pressure, and placed under no load.

The tire 1 includes a pair of bead portions 2, a pair of sidewall portions 3, and a tread portion 4. Each sidewall portion 3 extends between the tread portion 4 and the corresponding bead portion 2. The sidewall portion 3 may be, for example, a portion between the tire radial outer end of the bead core 5 and the ground contact edge E. Preferably, the sidewall portion 3 may be a portion between the tire radial outer end of the bead filler 8 and the ground contact edge E. The sidewall portion 3 of the tire 1 has a projecting portion 3A that projects outward in the tire width direction from the tire outer circumferential surface. A communication device 11 is embedded in the projecting portion 3A, which will be described in detail later. The projecting portion 3A has an annular shape extending in the tire circumferential direction on the tire outer circumferential surface.

The size of the projecting portion 3A may be set to any size depending on, for example, the size or intended use of the tire 1 or the communication device 11. For example, the length of a virtual line L connecting the tire radial inner end and tire radial outer end of the projecting portion 3A may be 10 mm to 60 mm. Thus, sufficient space for embedding the communication device 11 in the projecting portion 3A is secured, and the projecting portion 3A is less noticeable and less likely to spoil the appearance of the tire 1. More preferably, the length of the virtual line L may be 15 mm to 45 mm. The maximum length of the projecting portion 3A in the projecting direction may be, for example, 15 mm to 40 mm. Thus, sufficient space for embedding the communication device 11 in the projecting portion 3A is secured, and the projecting portion 3A is less noticeable and less likely to spoil the appearance of the tire 1. More preferably, the maximum length may be 15 mm to 35 mm. In this specification, the "projecting direction" of the projecting portion 3A denotes a direction perpendicular to the virtual line L connecting the tire radial inner end and tire radial outer end of the projecting portion 3A in a cross-sectional view in the tire width direction as indicated by the broken line in FIG. 1. In this specification, the tire widthwise inner side in the projecting direction of the projecting portion 3A is referred to as the "inner side in the projecting direction", and the tire widthwise outer side in the projecting direction of the projecting portion 3A is referred to as the "outer side in the projecting direction".

The width of the projecting portion 3A decreases toward the outer side in the projecting direction of the projecting portion 3A, in a cross-sectional view in the tire width direction. In this embodiment, the cross-sectional shape of the projecting portion 3A in the tire width direction is approximately triangular. The cross-sectional shape of the projecting portion 3A in the tire width direction is, however, not limited to a triangle, and may be a trapezoid, a shape with a rounded tip, or the like. In this way, the amount of rubber material used to form the projecting portion 3A can be reduced to thus reduce the weight and production cost of the tire 1.

Although this embodiment describes the case where the tire 1 is symmetrical with respect to the tire equatorial plane CL, the tire 1 may be asymmetrical with respect to the tire equatorial plane CL. For example, only one of the pair of sidewall portions 3 may have the projecting portion 3A.

The tire 1 includes a pair of bead cores 5 located in the bead portions 2, a carcass 6 composed of one or more plies toroidally extending between the pair of bead cores 5, and a belt 7 composed of one or more belt layers located on the tire radial outer side of the crown region of the carcass 6.

Each bead core 5 is composed of an annular cable bead extending in the tire circumferential direction. The cross-sectional shape of the bead core 5 in a plane orthogonal to its extending direction (cross-sectional shape in the tire width direction) is circular or approximately circular. The cross-sectional shape of the bead core 5 in the tire width direction may be, however, any shape such as a quadrangle or a hexagon. The cable bead is formed by coating a high carbon steel wire with rubber, for example. A bead filler 8 made of a rubber material or the like is provided on the tire radial outer side of the bead core 5. Alternatively, the bead filler 8 in the tire 1 may be omitted.

The carcass 6 is composed of one or more plies (one ply in this embodiment) toroidally extending between the pair of bead cores 5. The ply is formed by coating an organic fiber cord such as a nylon cord with rubber, for example. The ends of the carcass 6 are locked by the bead cores 5. Specifically, the carcass 6 includes a carcass body portion 6A located between the bead cores 5, and carcass folded portions 6B each folded back from inside to outside in the tire width direction around the corresponding bead core 5. The carcass folded portion 6B terminates near the position of the tire maximum width W in the reference state. Herein, the "position of the tire maximum width W" is the position at which the widthwise length of the tire 1 in a cross section in the tire width direction is longest. The carcass folded portion 6B may, however, have any length. The carcass 6 may have a structure in which the carcass folded portion 6B is folded back from outside to inside in the tire width direction around the bead core 5 or a structure in which the carcass folded portion 6B is wound around the bead core 5, or may include no carcass folded portion 6B.

The belt 7 is located on the tire radial outer side of the crown region of the carcass 6. The belt 7 is composed of one or more belt layers (two belt layers in this embodiment) laminated in the tire radial direction in the tire equatorial plane CL. The belt 7 is provided so as to cover the carcass 6 from the tire radial outer side in the tread portion 4. In the illustrated example, the belt 7 extends to a position that is outward in the tire width direction from the ground contact edge E, centering on the tire equatorial plane CL. Alternatively, the belt 7 may extend to a position that is inward in the tire width direction from the ground contact edge E.

The tire 1 further includes rubber chafers 9. Each rubber chafer 9 is provided so as to cover the bead core 5 and the carcass 6 from the tire radial inner side and the tire widthwise outer side. The rubber chafer 9 terminates at a position between the tire radial outer end of the bead filler 8 and the tire radial outer end of the carcass folded portion 6B. The rubber chafer 9 may, however, have any length.

A side rubber 10 is located on the tire radial outer side of the rubber chafer 9 so as to cover the tire widthwise outer side of the carcass 6. In this embodiment, the tire radial inner end of the side rubber 10 is located between the carcass 6 and the rubber chafer 9 in the tire width direction. Alternatively, the tire radial inner end of the side rubber 10 may be located outward in the tire radial direction from the rubber chafer 9, or located outward in the tire width direction from the rubber chafer 9.

The rubber chafer 9 may be made of a rubber material higher in strength than the side rubber 10. For example, the rubber chafer 9 may be made of a rubber material higher in carbon content than the side rubber 10.

The tire 1 is provided with the communication device 11.

The communication device 11 performs wireless communication. For example, the communication device 11 is a radio frequency (RF) tag. The RF tag is also referred to as a radio frequency identification (RFID) tag. The communication device 11 includes an integrated circuit (IC) chip including a controller and a storage, and one or more antennas connected to the IC chip. The IC chip may store any information about the tire 1, such as the identification information and manufacturing date of the tire 1. For example, the communication device 11 may have a long shape as a whole, with two linearly, wavily, or spirally extending antennas extending in opposite directions from the IC chip. Each antenna, however, may have any shape and may be located within the IC chip.

The IC chip may be operated by induced electromotive force generated by electromagnetic waves received by the one or more antennas. That is, the communication device 11 may be a passive type communication device. Alternatively, the communication device 11 may further include a battery and be capable of communication by generating electromagnetic waves using its own power. That is, the communication device 11 may be an active type communication device.

The communication device 11 is embedded in the projecting portion 3A. Since the projecting portion 3A projects outward in the tire width direction from the tire outer circumferential surface, when a load is applied to the tire 1, the projecting portion 3A is less likely to be subjected to the load and deformed. Providing the communication device 11 in such a projecting portion 3A makes the communication device 11 more failure-resistant. Moreover, as a result of the communication device 11 being provided in the projecting portion 3A, when the communication device 11 communicates with an electronic device located outward in the tire width direction from the tire 1, the other parts of the tire 1 are less likely to interfere with the communication by the communication device 11. This improves the usefulness of the communication device 11 provided in the tire 1. The communication device 11 may be embedded in the projecting portion 3A so that the longitudinal direction of the communication device 11 will be approximately parallel to the circumferential direction of the tire 1.

The projecting portion 3A includes at least part of the rubber chafer 9 and at least part of the side rubber 10. The communication device 11 is embedded at the boundary between the at least part of the rubber chafer 9 and the at least part of the side rubber 10. Thus, when manufacturing the tire 1, the communication device 11 can be stably installed in the tire 1, with it being possible to improve the productivity of the tire 1. More specifically, in the projecting portion 3A, the rubber chafer 9 is in contact with the communication device 11 from at least one of the tire radial inner side and tire widthwise inner side of the communication device 11, and the side rubber 10 is in contact with the communication device 11 from at least one of the tire radial outer side and tire widthwise outer side of the communication device 11. Accordingly, the durability of the communication device 11 embedded in the tire 1 is improved as a result of the communication device 11 being supported by the rubber chafer 9 higher in strength than the side rubber 10, and the communicability of the communication device 11 embedded in the tire 1 is improved as a result of the communication device 11 being covered with the side rubber 10 higher in conductivity than the rubber chafer 9.

In the reference state, the projecting portion 3A is located inward in the tire radial direction from the position of the tire maximum width W. The projecting portion 3A is therefore less likely to hit obstacles such as curbstones or pebbles. The probability of a failure of the communication device 11 embedded in the projecting portion 3A can thus be reduced.

In the reference state, the projecting portion 3A projects to a position that is outward in the tire width direction from the tire widthwise outer end of the rim R which is the applicable rim. Hence, for example during transportation of the tire 1, the projecting portion 3A prevents the rim R on which the tire 1 is mounted from coming into contact with a rim on which another tire is mounted. The projecting portion 3A also keeps the rim R from hitting obstacles such as curbstones or pebbles. The projecting portion 3A can thus function as a rim guard to prevent the rim R from being damaged.

### (Embodiment 2)

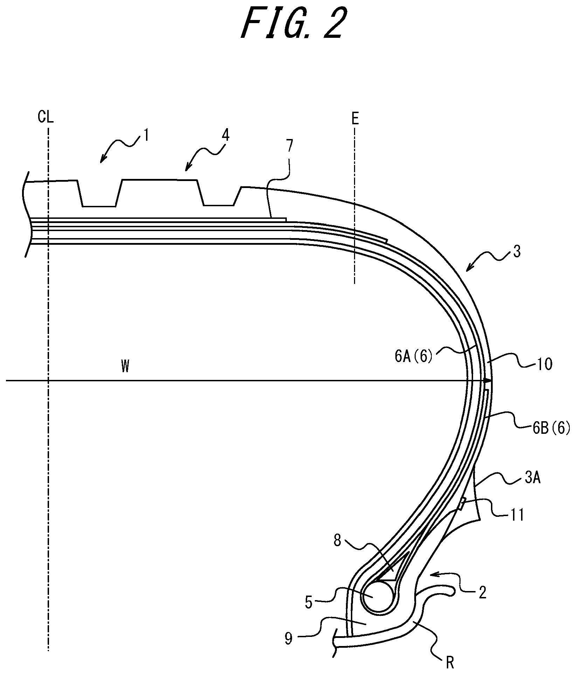

A tire 1 according to Embodiment 2 will be described below with reference to FIG. 2. Embodiment 2 is useful for understanding the present invention, but is not according to the present invention. FIG. 2 is a partial cross-sectional view of the tire 1 according to Embodiment 2 taken along the tire width direction. FIG. 2 illustrates the tire 1 in the reference state in which the tire 1 is attached to a rim R of a wheel, which is the applicable rim, filled to the prescribed internal pressure, and placed under no load.

Embodiment 2 differs from Embodiment 1 in that the projecting portion 3A provided in the sidewall portion 3 is made of a different rubber material from the other portions adjacent to the projecting portion 3A in the sidewall portion 3. Embodiment 2 will be described below, focusing on the differences from Embodiment 1. The parts having the same structures as those in Embodiment 1 are given the same reference signs.

The sidewall portion 3 of the tire 1 has the projecting portion 3A that projects outward in the tire width direction from the tire outer circumferential surface, as in Embodiment 1. The communication device 11 is embedded in the projecting portion 3A.

The projecting portion 3A is made of a different rubber material from the other portions adjacent to the projecting portion 3A in the sidewall portion 3. Hence, the rubber material forming the projecting portion 3A can be selected depending on the intended use of the tire 1 and the communication device 11. In this embodiment, the projecting portion 3A is made of a different rubber material from the rubber chafer 9 extending from the bead portion 2 to the sidewall portion 3 and the side rubber 10 mainly forming the sidewall portion 3.

For example, the projecting portion 3A may be made of a rubber material having high strength as a result of having higher carbon content than the other portions, in order to strengthen the projecting portion 3A against contact with obstacles, cutting, etc. The durability of the communication device 11 embedded in the tire 1 can thus be improved. This is useful when the tire 1 is mounted on a vehicle that is intended to run on rough roads. Alternatively, the projecting portion 3A may be made of a rubber material having high conductivity as a result of having lower carbon content than the other portions. The communicability of the communication device 11 embedded in the tire 1 can thus be improved.

In the projecting portion 3A, the communication device 11 is embedded at the interface with the rubber material forming the other portions. Thus, when manufacturing the tire 1, the communication device 11 can be stably installed in the tire 1, with it being possible to improve the productivity of the tire 1.

### (Embodiment 3)

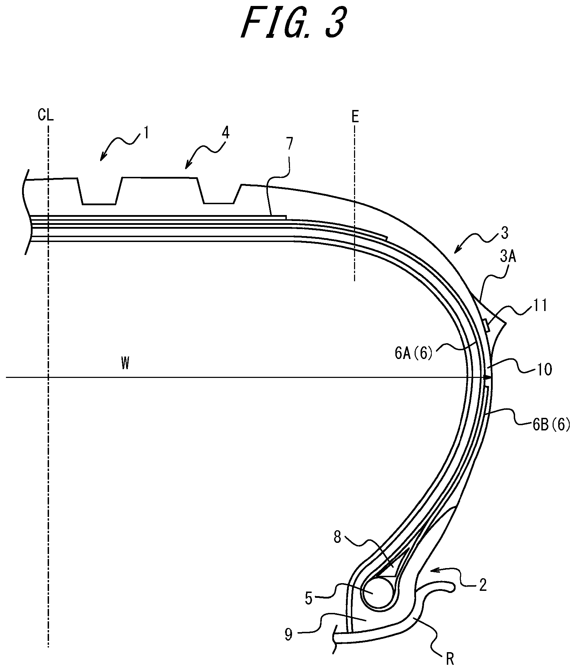

A tire 1 according to Embodiment 3 will be described below with reference to FIG. 3. Embodiment 3 is useful for understanding the present invention, but is not according to the present invention. FIG. 3 is a partial cross-sectional view of the tire 1 according to Embodiment 3 taken along the tire width direction. FIG. 3 illustrates the tire 1 in the reference state in which the tire 1 is attached to a rim R of a wheel, which is the applicable rim, filled to the prescribed internal pressure, and placed under no load.

Embodiment 3 differs from Embodiments 1 and 2 in that the projecting portion 3A is located outward in the tire radial direction from the position of the tire maximum width W in the sidewall portion 3. Embodiment 3 will be described below, focusing on the differences from Embodiments 1 and 2. The parts having the same structures as those in Embodiments 1 and 2 are given the same reference signs.

The sidewall portion 3 of the tire 1 has the projecting portion 3A that projects outward in the tire width direction from the tire outer circumferential surface, as in Embodiments 1 and 2. The communication device 11 is embedded in the projecting portion 3A.

The projecting portion 3A may be made of the same rubber material as the other portions adjacent to the projecting portion 3A in the sidewall portion 3. For example, the projecting portion 3A may be made of the same rubber material as the side rubber 10 that mainly forms the sidewall portion 3. Alternatively, the projecting portion 3A may be made of a different rubber material from the other portions adjacent to the projecting portion 3A in the sidewall portion 3, as in Embodiment 2. For example, the projecting portion 3A may be made of a different rubber material from the side rubber 10 that mainly forms the sidewall portion 3.

In the reference state, the projecting portion 3A is located outward in the tire radial direction from the position of the tire maximum width W. Hence, when the communication device 11 communicates with an electronic device located outward in the tire radial direction from the tire 1, such as a road surface, the other parts of the tire 1 are less likely to interfere with the communication by the communication device 11. This improves the usefulness of the communication device 11 provided in the tire 1.

As described above, the tire 1 according to each embodiment of the present invention comprises: the projecting portion 3A that projects outward in the tire width direction on the tire outer circumferential surface of the sidewall portion 3; and the communication device 11 embedded in the projecting portion 3A. With such a structure, since the communication device 11 is embedded in the projecting portion 3A that is less likely to be deformed when a load is applied to the tire 1, the communication device 11 is more failure-resistant. Moreover, as a result of the communication device 11 being provided in the projecting portion 3A, when the communication device 11 communicates with an electronic device located outside the tire 1, the other parts of the tire 1 are less likely to interfere with the communication by the communication device 11. This improves the usefulness of the communication device 11 provided in the tire 1.

In the tire 1 according to Embodiment 1 of the present invention, the projecting portion 3A includes at least part of the rubber chafer 9 and at least part of the side rubber 10, and the communication device 11 is embedded at the boundary between the at least part of the rubber chafer 9 and the at least part of the side rubber 10. With such a structure, when manufacturing the tire 1, the communication device 11 can be stably installed in the tire 1, with it being possible to improve the productivity of the tire 1.

In the tire 1 according to Embodiment 1 of the present invention, preferably, the projecting portion 3A is made of a different rubber material from any other portion adjacent to the projecting portion 3A in the sidewall portion 3. With such a structure, the rubber material forming the projecting portion 3A can be selected depending on the intended use of the tire 1 and the communication device 11. This further improves the usefulness of the communication device 11 provided in the tire 1.

In the tire 1 according to each embodiment of the present invention, preferably, the width of the projecting portion 3A decreases toward the outer side in the projecting direction of the projecting portion 3A in a cross-sectional view in the tire width direction. With such a structure, the amount of rubber material used to form the projecting portion 3A can be reduced to thus reduce the weight and production cost of the tire 1.

In the tire 1 according to Embodiment 1 of the present invention, and Embodiment 2, preferably, in the reference state in which the tire 1 is attached to a rim R which is the applicable rim, filled to the prescribed internal pressure, and placed under no load, the projecting portion 3A is located inward in the tire radial direction from the position of the tire maximum width W. With such a structure, the projecting portion 3A is less likely to hit obstacles such as curbstones or pebbles. The probability of a failure of the communication device 11 can thus be reduced.

In the tire 1 according to Embodiment 1 of the present invention, and Embodiment 2, preferably, in the reference state in which the tire 1 is attached to a rim R which is the applicable rim, filled to the prescribed internal pressure, and placed under no load, the projecting portion 3A projects to a position that is outward in the tire width direction from the tire widthwise outer end of the applicable rim. With such a structure, the projecting portion 3A can function as a rim guard to prevent the rim R from being damaged.

In the tire 1 according to Embodiment 3, preferably, in the reference state in which the tire 1 is attached to a rim R which is the applicable rim, filled to the prescribed internal pressure, and placed under no load, the projecting portion 3A is located outward in the tire radial direction from the position of the tire maximum width W. With such a structure, when the communication device 11 communicates with an electronic device located outward in the tire radial direction from the tire 1, such as a road surface, the other parts of the tire 1 are less likely to interfere with the communication by the communication device 11. This further improves the usefulness of the communication device 11 provided in the tire 1.

While the presently disclosed techniques have been described above by way of embodiments and drawings, various changes and modifications can be made by those of ordinary skill in the art based on the present invention. Such changes and modifications are therefore included in the scope of the present invention. For example, the structures, functions, etc. included in each embodiment may be rearranged without logical inconsistency. The structures, functions, etc. included in each embodiment may be used in combination with any other embodiment, and a plurality of structures, functions, etc. may be combined into one structure, function, etc., one structure, function, etc. may be divided into a plurality of structures, functions, etc., or part of the structures, functions, etc. may be omitted.

### REFERENCE SIGNS LIST

- 1: tire
- 2: bead portion
- 3: sidewall portion
- 3A: projecting portion
- 4: tread portion
- 5: bead core
- 6: carcass
- 6A: carcass body portion
- 6B: carcass folded portion
- 7: belt
- 8: bead filler
- 9: rubber chafer
- 10: side rubber
- 11: communication device
- R: rim
- CL: tire equatorial plane
- W: tire maximum width
- E: ground contact edge
- L: virtual line

## Claims

1. A tire (1) comprising:
a projecting portion (3A) that projects outward in a tire width direction on a tire outer circumferential surface of a sidewall portion (3), wherein the projecting portion (3A) includes at least part of a rubber chafer (9) and at least part of a side rubber (10); and
a communication device (11) embedded in the projecting portion (3A),
**characterized in that**
the communication device (11) is embedded at a boundary between the at least part of the rubber chafer (9) and the at least part of the side rubber (10).

2. The tire (1) according to claim 1, wherein the projecting portion (3A) is made of a different rubber material from an other portion adjacent to the projecting portion (3A) in the sidewall portion (3).

3. The tire (1) according to claims 1 or 2, wherein a width of the projecting portion (3A) decreases toward an outer side in a projecting direction of the projecting portion in a cross-sectional view in the tire width direction.

4. The tire (1) according to any one of claims 1 to 3, wherein in a reference state in which the tire (1) is attached to an applicable rim (R), filled to a prescribed internal pressure, and placed under no load, the projecting portion (3A) is located inward in a tire radial direction from a position of a tire maximum width (W).

5. The tire (1) according to any one of claims 1 to 4, wherein in a reference state in which the tire (1) is attached to an applicable rim (R), filled to a prescribed internal pressure, and placed under no load, the projecting portion (3A) projects to a position that is outward in the tire width direction from a tire widthwise outer end of the applicable rim (R).

6. The tire (1) according to any one of claims 1 to 3, wherein in a reference state in which the tire is attached to an applicable rim (R), filled to a prescribed internal pressure, and placed under no load, the projecting portion (3A) is located outward in a tire radial direction from a position of a tire maximum width (W).

## Patentansprüche

1. Reifen (1), der Folgendes umfasst:
einen vorspringenden Abschnitt (3A), der in einer Reifenbreitenrichtung auf einer Reifenaußenumfangsfläche eines Seitenwandabschnitts (3) nach außen vorspringt, wobei der vorspringende Abschnitt (3A) zumindest einen Teil eines Gummi-Wulstschutzbandes (9) und zumindest einen Teil eines Seitengummis (10) einschließt, und
eine Kommunikationseinrichtung (11), die in dem vorspringenden Abschnitt (3A) eingebettet ist,
**dadurch gekennzeichnet, dass**
die Kommunikationseinrichtung (11) an einer Grenze zwischen dem zumindest einen Teil des Gummi-Wulstschutzbandes (9) und dem zumindest einen Teil des Seitengummis (10) eingebettet ist.

2. Reifen (1) nach Anspruch 1, wobei der vorspringende Abschnitt (3A) aus einem Gummimaterial hergestellt ist, das sich von einem anderen an den vorspringenden Abschnitt (3A) angrenzenden Abschnitt in dem Seitenwandabschnitt (3) unterscheidet.

3. Reifen (1) nach Anspruch 1 oder 2, wobei eine Breite des vorspringenden Abschnitts (3A) in einer Querschnittsansicht in der Reifenbreitenrichtung zu einer in einer Vorsprungsrichtung des vorspringenden Abschnitts äußeren Seite hin abnimmt.

4. Reifen (1) nach einem der Ansprüche 1 bis 3, wobei in einem Referenzzustand, in dem der Reifen (1) an einer anwendbaren Felge (R) befestigt, bis zu einem vorgeschriebenen Innendruck gefüllt und keiner Last unterworfen ist, der vorspringende Abschnitt (3A) von einer Position einer maximalen Reifenbreite (W) in einer Reifenradialrichtung nach innen angeordnet ist.

5. Reifen (1) nach einem der Ansprüche 1 bis 4, wobei in einem Referenzzustand, in dem der Reifen (1) an einer anwendbaren Felge (R) befestigt, bis zu einem vorgeschriebenen Innendruck gefüllt und keiner Last unterworfen ist, der vorspringende Abschnitt (3A) bis zu einer Position vorspringt, die sich von einem in Reifenbreitenrichtung äußeren Ende der anwendbaren Felge (R) in der Reifenbreitenrichtung außen befindet.

6. Reifen (1) nach einem der Ansprüche 1 bis 3, wobei in einem Referenzzustand, in dem der Reifen (1) an einer anwendbaren Felge (R) befestigt, bis zu einem vorgeschriebenen Innendruck gefüllt und keiner Last unterworfen ist, der vorspringende Abschnitt (3A) von einer Position einer maximalen Reifenbreite (W) in einer Reifenradialrichtung nach außen angeordnet ist.

## Revendications

1. Pneu (1) comprenant :
une partie en saillie (3A) qui fait saillie vers l'extérieur dans une direction de largeur du pneu sur une surface circonférentielle extérieure de pneu d'une partie de flanc (3), la partie en saillie (3A) incluant au moins une partie d'une bandelette talon en caoutchouc (9) et au moins une partie d'un caoutchouc de flanc (10), et
un dispositif de communication (11) intégré dans la partie en saillie (3A) ;
**caractérisé en ce que**
le dispositif de communication (11) est intégré au niveau d'une limite entre l'au moins une partie de la bandelette talon en caoutchouc (9) et l'au moins une partie du caoutchouc de flanc (10).

2. Pneu (1) selon la revendication 1, dans lequel la partie en saillie (3A) est constituée d'un matériau de caoutchouc différent d'une autre partie adjacente à la partie en saillie (3A) dans la partie de flanc (3).

3. Pneu (1) selon les revendications 1 ou 2, dans lequel une largeur de la partie en saillie (3A) diminue vers un côté extérieur dans le sens de saillie de la partie en saillie dans une vue en coupe transversale dans la direction de largeur du pneu.

4. Pneu (1) selon l'une quelconque des revendications 1 à 3, dans lequel, dans un état de référence dans lequel le pneu (1) est fixé à une jante applicable (R), gonflé à une pression interne prescrite, et placé sous aucune charge, la partie en saillie (3A) est située vers l'intérieur, dans une direction radiale du pneu, par rapport à la position d'une largeur maximale du pneu (W).

5. Pneu (1) selon l'une quelconque des revendications 1 à 4, dans lequel, dans un état de référence dans lequel le pneu (1) est fixé à une jante applicable (R), gonflé à une pression interne prescrite, et placé sous aucune charge, la partie en saillie (3A) fait saillie jusqu'à une position qui est vers l'extérieur, dans la direction de largeur du pneu, par rapport à une extrémité extérieure dans le sens de la largeur du pneu de la jante applicable (R).

6. Pneu (1) selon l'une quelconque des revendications 1 à 3, dans lequel, dans un état de référence dans lequel le pneu (1) est fixé à une jante applicable (R), gonflé à une pression interne prescrite, et placé sous aucune charge, la partie en saillie (3A) est située à l'extérieur, dans une direction radiale du pneu, par rapport à la position d'une largeur maximale du pneu (W).
